# FASCICULE DE BREVET EUROPEEN

(11) **EP 4 153 898 B1**
(45) Date de publication et mention de la délivrance du brevet: **01.07.2026**
(21) Numéro de dépôt: 21722879.0
(22) Date de dépôt: 03.05.2021
(51) Int. Cl.: F17C 3/00

(54) **RÉSERVOIR DE STOCKAGE DE GAZ LIQUÉFIÉ**
FLÜSSIGGASSPEICHERTANK
LIQUEFIED GAS STORAGE TANK

(30) Priorité: 20.05.2020 FR 2005249
(43) Date de publication de la demande: 29.03.2023
(73) Titulaire: L'Air Liquide, Société Anonyme pour l'Etude et l'Exploitation des Procédés Georges Claude, 75007 Paris (FR)
(72) Inventeur: BERNHARDT, Jean-Marc, 38360 SASSENAGE (FR)
(74) Mandataire: Air Liquide
(86) Numéro de dépôt international: PCT/EP2021/061530
(87) Numéro de publication internationale: WO 2021/233666

(56) Documents cités:
- US-A1- 2013 008 185
- US-A1- 2013 305 745

## Description

L'invention concerne un réservoir de stockage de gaz liquéfié, notamment d'hydrogène liquéfié.

US2013/008185A1 divulgue un tel réservoir.

L'invention concerne plus particulièrement un réservoir de stockage de gaz liquéfié, notamment d'hydrogène liquéfié, comprenant une enveloppe délimitant un volume de stockage s'étendant selon une direction principale qui est horizontale en configuration d'utilisation du réservoir, le réservoir comprenant au moins une paroi déflectrice dans le volume de stockage.

L'hydrogène sous forme liquide est préféré lorsque de grandes quantités de produit doivent être stockées ou transportées sur de grandes distances. Un autre avantage de l'hydrogène liquide est que à une température de 20K cela élimine de facto toutes les impuretés (solides à cette température) du gaz, ce qui optimise le fonctionnement des piles à combustible qui l'utilisent.

Cependant, la faible densité du liquide comparativement à l'eau par exemple limite la pression disponible par hauteur hydrostatique, et la basse température peut engendrer des pertes par évaporation assez importantes lors des transferts. Les systèmes de déchargement de camions et les réservoirs des stations de fourniture d'hydrogène peuvent engendrer des pertes pouvant aller jusqu'à 15 % de la production.

Ces pertes par pressurisation des camions peuvent bien sûr être perdu au niveau de chaque station ou récupérées, réchauffées, re-comprimées et réinjectées dans un liquéfacteur. Ceci nécessite d'investir dans un système de recirculation des pertes et de sur-dimensionner le système de liquéfaction.

Le transport d'un liquide sous-refroidi nécessite des précautions afin de ne pas faire baisser la pression du réservoir sous la pression atmosphérique. Ceci peut être dangereux pour la tenue mécanique du réservoir ou en raison de l'entrée possible d'air dans le fluide transporté.

Les camions venant du liquéfacteur doivent être pressurisés afin de décharger l'hydrogène liquide du camion vers le stockage de la station (ce stockage est généralement maintenu sous pression afin de garantir le fonctionnement de la pompe liquide ou pour permettre la fourniture sous pression de l'hydrogène). Cette pressurisation se fait par évaporation et réchauffage d'hydrogène du camion (PBU). Ceci injecte donc de l'énergie dans le camion.

Une fois la quantité de liquide transférée vers l'utilisateur, le camion peut aller remplir une autre station ou retourner s'approvisionner au liquéfacteur. Le mouvement du camion va permettre une réduction de la pression grâce au mouvement du liquide dans le volume de stockage et son contact avec la phase vapeur. En revanche, la pression résultante sera toujours supérieure à la pression initiale du fait de l'ajout d'énergie dans le système.

Au final, le nombre de remplissages du camion et la pression nécessaire pour ces stations déterminera la quantité d'hydrogène perdue ou à re-liquéfier au liquéfacteur après la tournée. Lors de la dépressurisation d'un stockage de liquide cryogénique vers un autre équipement, différents cas peuvent se produire. Ainsi, la réduction de pression à l'intérieur du stockage génère une évaporation du liquide (bulles dans le liquide) si celui-ci est à l'équilibre avec la vapeur. Cette évaporation a tendance à homogénéiser la température du liquide (anti-stratification). La masse de liquide à extraire du stockage pour réduire la pression est directement liée à la température de la vapeur sortante du stockage (plus la vapeur est froide, plus la densité est importante et plus la masse à extraire est importante pour la même variation de pression).

Lors de la pressurisation d'un stockage de liquide cryogénique par des entrées thermiques ou venant d'un autre réservoir, différents cas peuvent se produire. Ainsi, la pression à l'intérieur du stockage augmente d'autant plus vite que la vapeur se stratifie au-dessus du liquide (réduction de la densité de la vapeur lorsque la température augmente). Pour une augmentation identique de pression, il est nécessaire injecter une plus grande masse de vapeur froide (température d'équilibre) que de masse de vapeur « chaude » en relation avec la densité du gaz.

Lors du remplissage d'un stockage de liquide cryogénique par du liquide venant d'un autre réservoir, différents cas peuvent se produire. Ainsi, lors du remplissage par le bas du stockage sans extraction de vapeur par le haut, la pression augmente d'autant plus vite que la vapeur est stratifiée au-dessus du liquide. Lors du remplissage du stockage par le haut (pluie), la pression chute d'autant plus que le liquide est plus froid que la vapeur présente dans le stockage.

Lors de la vidange d'un stockage de liquide cryogénique, différents cas peuvent se produire. Ainsi, lors de la vidange du stockage sans ajout de vapeur par le haut, la pression baisse d'autant plus vite que le liquide est loin de l'équilibre (sous-refroidi), sinon, il y a évaporation comme pour le cas d'une dépressurisation.

Lors de la vidange du stockage avec ajout de vapeur par le haut, la masse de vapeur à ajouter baisse d'autant plus que la température de la vapeur est loin de l'équilibre.

En résumé, les configurations idéales de la vapeur (phase gazeuse) et du liquide dans le réservoir peuvent changer pour chaque d'opération (dépressurisation, remplissage...) et peuvent être résumées comme suit.

Dépressurisation : vapeur stratifiée, liquide sous refroidi. Remplissage : vapeur stratifiée, liquide sous refroidi. Stockage/transport plein : vapeur non stratifiée, liquide sous refroidi.

Stockage/transport intermédiaire/vide : vapeur stratifiée, liquide sous refroidi.

Pressurisation : vapeur stratifiée, liquide sous refroidi. Vidange : vapeur stratifiée, liquide sous refroidi.

Ainsi, seul le stockage et/ou le transport d'un réservoir plein nécessiterait d'être à l'équilibre (non stratifié) sur la phase vapeur afin d'éviter une montée importante de pression sur ce faible volume de vapeur. Il est préférable donc que le liquide soit stratifié et sous-refroidi par rapport à la température d'équilibre à la pression du stockage.

Un but de la présente invention est de pallier tout ou partie des inconvénients de l'art antérieur relevés ci-dessus.

A cette fin, le réservoir selon l'invention, par ailleurs conforme à la définition générique qu'en donne le préambule ci-dessus, est essentiellement caractérisé en ce qu'il comprend plusieurs parois déflectrices dans le volume de stockage qui s'étendent de façon décalée selon la direction principale pour forcer le fluide à réaliser au moins un aller-retour selon la direction principale lors de son transit entre l'extrémité inférieure et l'extrémité supérieure du volume de stockage. Cette structure permet de conserver la température du liquide stratifiée et sous refroidie malgré les mouvements potentiels du liquide du fait du transport, de la convection naturelle ou des opérations de remplissage/vidange.

Par ailleurs, des modes de réalisation de l'invention peuvent comporter l'une ou plusieurs des caractéristiques suivantes :
- les parois déflectrices s'étendent sur une partie du volume de stockage selon la direction principale à partir d'une extrémité de l'enveloppe,
- les parois déflectrice sont horizontales ou sensiblement horizontales en configuration d'utilisation du réservoir,
- les parois déflectrices s'étendent horizontalement selon toute la section du volume de stockage,
- le réservoir comporte un nombre impair de parois déflectrices, notamment trois parois déflectrices,
- le réservoir comporte un orifice de remplissage et/ou de soutirage situé en partie inférieure d'une extrémité longitudinale de l'enveloppe,
- le réservoir comporte un orifice de remplissage et/ou de soutirage situé en partie supérieure d'une extrémité longitudinale de l'enveloppe,
- le réservoir comporte un orifice de remplissage ou de soutirage de fluide situé à une extrémité longitudinale et à une hauteur intermédiaire entre les parties supérieure et inférieure du volume de stockage,
- le réservoir comporte une paroi déflectrice perforée d'une pluralité d'orifices,
- le réservoir comporte une paroi déflectrice perforée d'une pluralité d'orifices par exemple sur une partie seulement de la surface de ladite paroi déflectrice,
- la paroi déflectrice située en partie supérieure du volume de stockage est perforée d'une pluralité d'orifices,
- au moins une partie des parois déflectrices est composée de matériau souple, notamment plus léger que le matériau constitutif de l'enveloppe.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue en coupe verticale, schématique et partielle, illustrant un premier exemple de réalisation d'un réservoir selon l'invention,
[Fig. 2] représente une vue en coupe verticale, schématique et partielle, illustrant un deuxième exemple de réalisation d'un réservoir selon l'invention,
[Fig. 3] représente une vue en coupe verticale, schématique et partielle, illustrant un troisième exemple de réalisation d'un réservoir selon l'invention.

Le réservoir 1 représenté schématiquement est configuré pour le stockage de gaz liquéfié, notamment d'hydrogène liquéfié.

Ce réservoir comprend une enveloppe 2, par exemple de forme générale cylindrique, délimitant un volume de stockage s'étendant selon une direction A principale. Par exemple cette direction A principale est la direction longitudinale du réservoir. Les génératrices de la partie cylindrique peuvent être parallèles à cet axe ou direction A principale. La direction A principale peut être horizontale en configuration d'utilisation du réservoir 1. C'est-à-dire que le réservoir 1 peut être un réservoir de type « horizontale » ou « vertical » ou sphérique (dans ce dernier cas la direction A principale peut être horizontale) ou toute autre forme appropriée.

Dans les représentations schématiques, seule l'enveloppe 2 est représentée. Bien entendu, le réservoir 1 peut être du type à double enveloppe avec une paroi disposée autour de l'enveloppe 2 en ménageant un espace sous vide et isolé thermiquement.

Le réservoir 1 comprend plusieurs parois 3 déflectrice horizontales dans le volume de stockage qui s'étendent de façon décalée selon la direction A principale. Ces parois 3 déflectrices sont agencées pour forcer le fluide à réaliser au moins un aller-retour selon la direction A principale lors de son transit entre l'extrémité inférieure et l'extrémité supérieure du volume 2 de stockage.

Dans les exemples illustrés, trois parois déflectrices sont prévues. Bien sûr deux ou plus de trois parois 3 peuvent être prévues.

Les parois 3 déflectrices s'étendent sur une partie de la longueur du volume de stockage à partir d'une extrémité longitudinale de l'enveloppe 2. Par exemple, les parois 3 déflectrices prises successivement verticalement sont reliées alternativement à l'une puis à l'autre extrémité longitudinale de l'enveloppe 2.

Dans le cas de trois parois 3 déflectrices tel qu'illustré, ceci forme trois chicanes obligeant le fluide à trois changement de directions longitudinalement pour passer de haut en bas du réservoir (ou inversement).

De préférence, les parois 3 déflectrices s'étendent horizontalement sur toute la section du volume de stockage et sont reliées à l'enveloppe sur leur bordure latérale (sauf à l'extrémité dite libre qui forme un passage vertical pour le fluide).

Ces parois 3 déflectrices limitent le contact ou le transfert du liquide du bas du volume de stockage avec le liquide ou la vapeur du haut du volume de stockage.

Ceci permet de maintenir un liquide stratifié et sous-refroidi dans la partie basse du volume de stockage. En fonction du niveau de remplissage, la vapeur peut également être stratifiée ou non en fonction des avantages attendus.

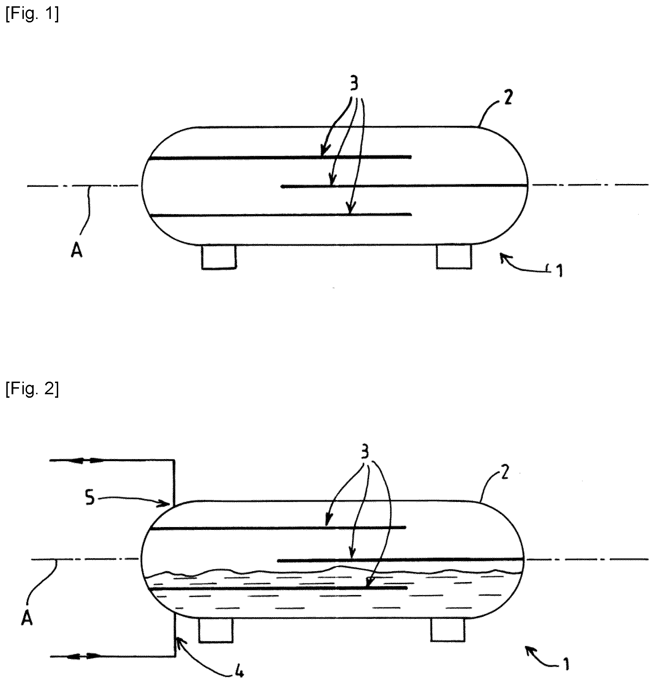

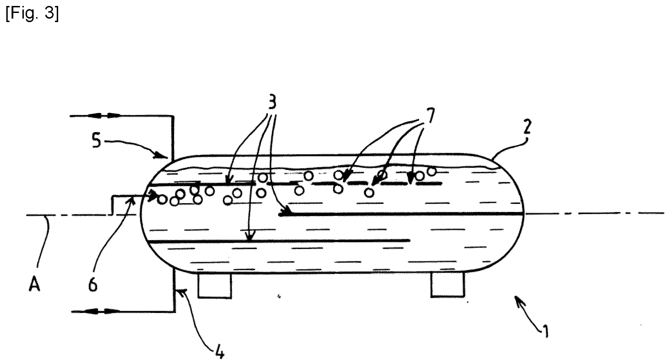

Comme illustré aux [Fig. 2] et [Fig. 3], le réservoir peut comporter un orifice 4 de remplissage ou de soutirage situé en partie inférieure d'une extrémité longitudinale de l'enveloppe 2 et relié à une conduite.

De même, le réservoir peut comporter un orifice 5 de remplissage ou de soutirage situé en partie supérieure d'une extrémité longitudinale de l'enveloppe 2 et relié à une conduite.

En cas de remplissage par le bas, le liquide froid arrivant par l'orifice 4 doit parcourir la longueur du volume de stockage avant de pouvoir passer à l'étage supérieur et ainsi de suite. Le liquide se réchauffe et s'évapore partiellement si les parois de l'enveloppe 2 sont trop chaudes. En revanche, cette vapeur ou ce liquide proche de l'équilibre sont poussé(es) vers le haut du volume de stockage par les parois déflectrices horizontales sans interagir avec le liquide froid arrivant par l'alimentation.

La vapeur sortant du stockage est réchauffée au fur et à mesure de sa montée dans le stockage au contact des parois chaudes (mise en froid).

Lorsque le volume de stockage est plein, la stratification du liquide est conservée avec les parois déflectrices et il est possible de limiter la stratification de la vapeur avec des mouvements (pour le transport) ou par une extraction de la vapeur pour un stockage fixe.

Cette solution permet le cas échéant également de remplacer avantageusement les parois « anti-ballotement » de liquide traditionnellement installées dans les réservoirs mobiles. En effet, la limitation de la masse de liquide pouvant se mettre en mouvement par les parois 3 déflectrices diminue automatiquement l'effet de ballotement du liquide lors des mouvements brusques. Comme illustré à la Fig. 2] ou à la [Fig. 3], il est possible de prévoir un retour de fluide avec préférentiellement de la vapeur vers l'intérieur de volume de stockage via un orifice 6 situé à une hauteur intermédiaire entre les parties supérieure et inférieure du volume de stockage.

Cet orifice 6 intermédiaire peut être relié à une conduite et peut être situé entre deux parois 3 déflectrices afin de pouvoir passer ce fluide et partiellement cette vapeur à travers du liquide dans le but de sa condensation, tout en conservant une partie du liquide sous-refroidi en partie inférieure.

En plus ou alternativement, et comme illustré à la [Fig. 3], la dernière paroi 3 déflectrice (supérieure) peut avoir une structure perforée (plusieurs trous) pour laisser passer le gaz et augmenter la surface de contact entre le gaz et le liquide. Cette option peut également être utilisée avantageusement en cas de remplissage par le haut du volume de stockage afin d'augmenter les zones d'échange entre le liquide entrant (tombant) et le gaz présent. Ceci permet d'éviter l'installation d'un distributeur de liquide type « injecteur » sur la longueur du réservoir.

En plus ou alternativement, les parois 3 déflectrices peuvent constituées d'un matériau léger et souple (par exemple plus léger par rapport à au reste du réservoir) gardant ses propriétés mécaniques à basse température afin de limiter la masse additionnelle de ces parois 3 déflectrices dans le réservoir (cf. par exemple FR2966899A). En effet, pour des réservoirs de transport, la masse du réservoir limite la quantité maximale de produit transportable.

Le réservoir selon l'invention permet, grâce aux parois déflectrices au moins en partie immergées dans la phase liquide, de garder la stratification du liquide tout en conservant le liquide à l'interface avec la phase gazeuse à l'équilibre avec la phase gazeuse (typiquement à une pression supérieure à la pression atmosphérique). Ceci permet de garder des couches de liquide sous-refroidies en partie inférieure du réservoir. Ceci est particulièrement avantageux pour un réservoir de transport et notamment pour transporter du liquide sous refroidi.

## Revendications

1. Réservoir de stockage de gaz liquéfié, notamment d'hydrogène liquéfié, comprenant une enveloppe (2) délimitant un volume de stockage s'étendant selon une direction (A) principale qui est horizontale en configuration d'utilisation du réservoir (1), le réservoir (1) comprenant plusieurs parois (3) déflectrices dans le volume de stockage qui s'étendent de façon décalée selon la direction (A) principale pour forcer le fluide à réaliser au moins un aller-retour selon la direction (A) principale lors de son transit entre l'extrémité inférieure et l'extrémité supérieure du volume (2) de stockage, caractérisé en ce plusieurs de ces parois (3) déflectrices sont situées dans la moitié inférieure du volume de stockage.

2. Réservoir selon la revendication 1, **caractérisé en ce que** les parois (3) déflectrices s'étendent sur une partie du volume de stockage selon la direction (A) principale à partir d'une extrémité de l'enveloppe (2).

3. Réservoir selon la revendication 1 ou 2, **caractérisé en ce que** les parois (3) déflectrice sont horizontales ou sensiblement horizontales en configuration d'utilisation du réservoir (1).

4. Réservoir selon l'une quelconque des revendications 1 à 3, **caractérisé en ce que** les parois (3) déflectrices s'étendent horizontalement selon toute la section du volume de stockage.

5. Réservoir selon l'une quelconque des revendications 1 à 4, **caractérisé en ce qu'**il comporte un nombre impair de parois (3) déflectrices, notamment trois parois (3) déflectrices.

6. Réservoir selon l'une quelconque des revendications 1 à 5, **caractérisé en ce qu'**il comporte un orifice (4) de remplissage et/ou de soutirage situé en partie inférieure d'une extrémité longitudinale de l'enveloppe (2).

7. Réservoir selon l'une quelconque des revendications 1 à 6, **caractérisé en ce qu'**il comporte un orfice (5) de remplissage et/ou de soutirage situé en partie supérieure d'une extrémité longitudinale de l'enveloppe (2).

8. Réservoir selon l'une quelconque des revendications 1 à 7, **caractérisé en ce qu'**il comporte un orifice (6) de remplissage ou de soutirage de fluide situé à une extrémité longitudinale et à une hauteur intermédiaire entre les parties supérieure et inférieure du volume de stockage.

9. Réservoir selon l'une quelconque des revendications 1 à 8, **caractérisé en ce qu'**il comporte une paroi (3) déflectrice perforée d'une pluralité d'orifices (7).

10. Réservoir selon l'une quelconque des revendications 1 à 9, **caractérisé en ce qu'**il comporte une paroi (3) déflectrice perforée d'une pluralité d'orifices (7) sur une partie seulement de la surface de ladite paroi (3) déflectrice.

11. Réservoir selon l'une quelconque des revendications 1 à 10, **caractérisé en ce que** la paroi (3) déflectrice située en partie supérieure du volume de stockage est perforée d'une pluralité d'orifices (7).

12. Réservoir selon l'une quelconque des revendications 1 à 11, **caractérisé en ce qu'**au moins une partie des parois (3) déflectrices est composée de matériau souple, notamment plus léger que le matériau constitutif de l'enveloppe.

13. Réservoir selon l'une quelconque des revendications 1 à 12, **caractérisé en ce qu'**il contient du gaz liquéfié et au moins une partie des parois (3) déflectrices est immergée dans la phase liquide.

14. Procédé de stockage d'un gaz cryogénique liquéfié utilisant un réservoir selon l'une quelconque des revendications 1 à 13, **caractérisé en ce que** le gaz liquéfié est stocké dans le réservoir (1) avec un niveau de liquide situé au-dessus de l'une au moins des parois déflectrices.

## Patentansprüche

1. Speicherbehälter für verflüssigtes Gas, insbesondere verflüssigten Wasserstoff, umfassend eine Hülle (2), die ein Speichervolumen begrenzt, das sich entlang einer Hauptrichtung (A) erstreckt, die in der Gebrauchskonfiguration des Behälters (1) horizontal ist, wobei der Behälter (1) mehrere Prallwände (3) im Speichervolumen umfasst, die sich versetzt zueinander entlang der Hauptrichtung (A) erstrecken, um das Fluid zu zwingen, bei seinem Durchgang zwischen dem unteren Ende und dem oberen Ende des Speichervolumens (2) mindestens eine Hin- und Herbewegung entlang der Hauptrichtung (A) auszuführen, **dadurch gekennzeichnet, dass** sich mehrere dieser Prallwände (3) in der unteren Hälfte des Speichervolumens befinden.

2. Speicherbehälter nach Anspruch 1, **dadurch gekennzeichnet, dass** sich die Prallwände (3) über einen Teil des Speichervolumens entlang der Hauptrichtung (A) von einem Ende der Hülle (2) aus erstrecken.

3. Speicherbehälter nach Anspruch 1 oder 2, **dadurch gekennzeichnet, dass** die Prallwände (3) in der Gebrauchskonfiguration des Behälters (1) horizontal oder im Wesentlichen horizontal sind.

4. Speicherbehälter nach einem der Ansprüche 1 bis 3, **dadurch gekennzeichnet, dass** sich die Prallwände (3) horizontal über den gesamten Querschnitt des Speichervolumens erstrecken.

5. Speicherbehälter nach einem der Ansprüche 1 bis 4, **dadurch gekennzeichnet, dass** er eine ungerade Anzahl von Prallwänden (3) aufweist, insbesondere drei Prallwände (3).

6. Speicherbehälter nach einem der Ansprüche 1 bis 5, **dadurch gekennzeichnet, dass** er eine Füll- und/oder Entnahmeöffnung (4) aufweist, die sich im unteren Teil eines Längsendes der Hülle (2) befindet.

7. Speicherbehälter nach einem der Ansprüche 1 bis 6, **dadurch gekennzeichnet, dass** er eine Füll- und/oder Entnahmeöffnung (5) aufweist, die sich im oberen Teil eines Längsendes der Hülle (2) befindet.

8. Speicherbehälter nach einem der Ansprüche 1 bis 7, **dadurch gekennzeichnet, dass** er eine Öffnung (6) zum Füllen oder Entnehmen von Fluid aufweist, die sich an einem Längsende und in einer mittleren Höhe zwischen dem oberen und unteren Teil des Speichervolumens befindet.

9. Speicherbehälter nach einem der Ansprüche 1 bis 8, **dadurch gekennzeichnet, dass** er eine Prallwand (3) umfasst, die mit einer Vielzahl von Öffnungen (7) perforiert ist.

10. Speicherbehälter nach einem der Ansprüche 1 bis 9, **dadurch gekennzeichnet, dass** er eine Prallwand (3) umfasst, die mit einer Vielzahl von Öffnungen (7) nur auf einem Teil der Oberfläche der besagten Prallwand (3) perforiert ist.

11. Speicherbehälter nach einem der Ansprüche 1 bis 10, **dadurch gekennzeichnet, dass** die im oberen Teil des Speichervolumens befindliche Prallwand (3) mit einer Vielzahl von Öffnungen (7) perforiert ist.

12. Speicherbehälter nach einem der Ansprüche 1 bis 11, **dadurch gekennzeichnet, dass** mindestens ein Teil der Prallwände (3) aus einem flexiblen Material besteht, das insbesondere leichter ist als das Material, aus dem die Hülle besteht.

13. Speicherbehälter nach einem der Ansprüche 1 bis 12, **dadurch gekennzeichnet, dass** er verflüssigtes Gas enthält und mindestens ein Teil der Prallwände (3) in die flüssige Phase eingetaucht ist.

14. Verfahren zur Speicherung eines verflüssigten kryogenen Gases unter Verwendung eines Behälters nach einem der Ansprüche 1 bis 13, **dadurch gekennzeichnet, dass** das verflüssigte Gas in dem Behälter (1) mit einem Flüssigkeitsstand gelagert wird, der sich über mindestens einer der Prallwände befindet.

## Claims

1. A storage tank for liquefied gas, in particular liquefied hydrogen, comprising an envelope (2) delimiting a storage volume extending along a principal direction (A) which is horizontal in the use configuration of the tank (1), the tank (1) comprising several baffle plates (3) in the storage volume which extend in a staggered manner along the principal direction (A) to force the fluid to perform at least one back-and-forth travel along the principal direction (A) during its transit between the lower end and the upper end of the storage volume (2), **characterized in that** several of these baffle plates (3) are located in the lower half of the storage volume.

2. The storage tank according to claim 1, **characterized in that** the baffle plates (3) extend over a part of the storage volume along the principal direction (A) from one end of the envelope (2).

3. The storage tank according to claim 1 or 2, **characterized in that** the baffle plates (3) are horizontal or substantially horizontal in the use configuration of the tank (1).

4. The storage tank according to any one of claims 1 to 3, **characterized in that** the baffle plates (3) extend horizontally over the entire section of the storage volume.

5. The storage tank according to any one of claims 1 to 4, **characterized in that** it comprises an odd number of baffle plates (3), in particular three baffle plates (3).

6. The storage tank according to any one of claims 1 to 5, **characterized in that** it comprises a filling and/or withdrawal orifice (4) located in the lower part of a longitudinal end of the envelope (2).

7. The storage tank according to any one of claims 1 to 6, **characterized in that** it comprises a filling and/or withdrawal orifice (5) located in the upper part of a longitudinal end of the envelope (2).

8. The storage tank according to any one of claims 1 to 7, **characterized in that** it comprises a fluid filling or withdrawal orifice (6) located at a longitudinal end and at an intermediate height between the upper and lower parts of the storage volume.

9. The storage tank according to any one of claims 1 to 8, **characterized in that** it comprises a baffle plate (3) perforated with a plurality of orifices (7).

10. The storage tank according to any one of claims 1 to 9, **characterized in that** it comprises a baffle plate (3) perforated with a plurality of orifices (7) on only a part of the surface of said baffle plate (3).

11. The storage tank according to any one of claims 1 to 10, **characterized in that** the baffle plate (3) located in the upper part of the storage volume is perforated with a plurality of orifices (7).

12. The storage tank according to any one of claims 1 to 11, **characterized in that** at least a part of the baffle plates (3) is made of a flexible material, in particular lighter than the constituent material of the envelope.

13. The storage tank according to any one of claims 1 to 12, **characterized in that** it contains liquefied gas and at least a part of the baffle plates (3) is immersed in the liquid phase.

14. A method for storing a liquefied cryogenic gas using a tank according to any one of claims 1 to 13, **characterized in that** the liquefied gas is stored in the tank (1) with a liquid level located above at least one of the baffle plates.
